(19) **Europäisches Patentamt**

**European Patent Office**

**Office européen des brevets**

(11) **EP 1 141 653 B1**

(12) **EUROPEAN PATENT SPECIFICATION**

(45) Date of publication and mention
of the grant of the patent:
**12.11.2003 Bulletin 2003/46**

(21) Application number: **99962430.7**

(22) Date of filing: **22.12.1999**

(51) Int Cl.$^7$: **F42C 13/04**

(86) International application number:
**PCT/GB99/04386**

(87) International publication number:
**WO 00/039521 (06.07.2000 Gazette 2000/27)**

(54) **PROXIMITY FUZE**

NÄHERUNGSZÜNDER

FUSEE DE PROXIMITE

(84) Designated Contracting States:
**AT BE CH CY DE DK ES FI FR GB GR IE IT LI LU MC NL PT SE**

(30) Priority: **23.12.1998 GB 9828407**

(43) Date of publication of application:
**10.10.2001 Bulletin 2001/41**

(73) Proprietor: **BAE Systems PLC**
**London SW1Y 5AD (GB)**

(72) Inventors:
  • **RAWCLIFFE, John Geoffrey,**
    **Royal Ordnance Plc**
    **Blackburn, Lancashire BB1 2LE (GB)**
  • **PATRICK, David Edward,**
    **Chiltern Microwave Ltd.**
    **Third Avenue, Letchworth, Herts SG6 2JF (GB)**

(74) Representative: **MacLean, Martin David**
    **BAE Systems plc,**
    **Group IP Dept.,**
    **Lancaster House**
    **PO Box 87**
    **Farnborough Aeropace Centre**
    **Farnborough, Hampshire GU14 6YU (GB)**

(56) References cited:
    DE-A- 2 909 817          FR-A- 2 581 765
    US-A- 3 895 304          US-A- 4 203 110
    US-A- 4 203 366

## Description

The present invention relates to an improved proximity fuze for a tube launched projectile carrying a payload.

The use of a fuze on a payload carrying projectile has two main functions. Firstly, it protects a handler of the projectile from inadvertent detonation or activation of the payload from when the projectile is manufactured until it is at least several metres from the site from which is was launched. Secondly, it initiates detonation or activation of the payload at a range from a target or from the ground, which range is appropriate to the function of the payload. The appropriate range may be contact with the target, after contact with the target, time from launch or proximity to the target. It is the latter type of fuze, a proximity fuze, to which the present invention relates.

Current proximity fuzes use a sensing technique known as "doppler" proximity sensing. This technique requires a continuous constant wavelength radio frequency signal to be transmitted by the fuze such that when the projectile approaches its target, the fuze starts to receive its own transmitted signal reflected back from the target. This return or echo signal then interferes with the transmitted signal from the fuze in a sequence of constructive and destructive interference as the projectile gets closer to the target. For a particular reflectivity of target and given that the power of the radio signal transmitted by the fuze and the gain of the receiver which detects the return signal are set, the distance of the projectile from the target when the fuze first starts to detect its own returned transmitted signal can be predicted. Based on this prediction of the proximity of the projectile to the target when the return signal is first detected by the fuze, the fuze can be made to count through successive cycles of constructive interference. The number of cycles of constructive interference that the fuze counts before it activates the payload can thus be set to fix the proximity of the fuze to the target when the fuze activates the payload.

One problem with this type of fuze is that different targets wilt have different reflectivities and so the distance from the target at which the fuze first starts to receive a reflected signal will vary from target to target. Accordingly, the distance from the target at which the payload is activated, ie. after the predetermined number of cycles of constructive interference have been counted, will vary from target to target. This reduces the accuracy of such "doppler" type proximity fuzes. This lack of accuracy is generally overcome in the field by firing a first projectile and observing its proximity to the target when it is activated. Then the number of cycles of constructive interference which are counted before activation can be adjusted for subsequently fired projectiles directed at the same target. However, an increasing number of potential applications require a higher accuracy fuze without the need for adjustment prior to use.

A further reduction in accuracy is caused because the frequency of the radio signal transmitted by the fuze is not generally as stable as required and so the timing of successive cycles of constructive interference will not be accurate. Further inaccuracies can be added because the ability of the fuze to detect cycles of constructive interference is dependent on background noise levels. Finally, the simple algorithm used by these "doppler" type proximity fuzes and the continuous transmission at one frequency can make them relatively easy to detect and to cause the fuze to malfunction, either by accident, eg. if the ammunition travels through a radar beam or by active sensor jamming measures taken by the enemy.

Document FR-A-2581765 describes a doppler fuze which measures the range to the target. D1 discloses that the fuze utilises the standard doppler technique of transmitting a signal at a known frequency and then detecting the return signal from a target moving relatively to the fuze. To overcome a disadvantage of using the doppler method of range determination, namely that the reflectivity of the target may cause a sufficient amplitude of return signal at a secondary lobe rather than the principal lobe and hence cause detonation of the missile at an undesirable range, D1 discloses an advanced signal processing technique to isolate two harmonics of the doppler frequency and process both harmonics to lessen the chances of a secondary lobe causing the detonation of the missile. Such signal processing is complex and expensive however, and requires more space in the already tightly-packed fuze.

The aim of the present invention is to provide an improved proximity fuze which can overcome at least some of the problems discussed above. In particular the present invention aims to provide a more accurate proximity fuze which is more difficult to defeat by active sensor jamming measures than the currently used "doppler" type fuzes.

According to a first aspect of the present invention there is provided a proximity fuze for use In a tube launched projectile carrying a payload, comprising:

> an oscillator for generating a continuous radio frequency signal which has a varying frequency,
> a single antenna for transmitting the continuous radio frequency signal and for receiving an echo of the continuous radio frequency signal,
> a signal processor comprising mixing means for mixing at least part of the transmitted signal with at least part of echo signal simultaneously received, to generate a range signal comprising an intermediate frequency signal with a frequency corresponding to the difference between the frequency of the transmitted radio frequency signal and the simultaneously received echo signal, said echo simultaneously received not being an echo of the transmitted signal at the point in time when the signals are mixed, means for comparing the range signal with a reference signal and depending on the result of the comparison generating an activation signal for activating the payload,

and wherein a directional coupling means is used for coupling the radio frequency signal from the oscillator to the antenna and to the signal processor and for coupling the echo signal from the antenna to the signal processor.

The transmitted signal is reflected by the target for the projectile or by the ground and the antenna means receives an echo signal, ie. the component of the transmitted radio frequency signal which is reflected off the ground or the target. As the transmitted radio frequency signal has a time varying property, this property of the received signal will be different from that of the transmitted signal by an amount dependant on the rate at which the property of the radio frequency signal varies and the time it takes for the radio frequency signal to travel between the antenna to the target or the ground and back. As the time it takes for the radio frequency signal to travel between the antenna to the target or the ground and back is directly related to the distance or proximity of the antenna (and thus the projectile) from the ground or the target, the difference between the relevant property of the transmitted and received signal can be used to generate a range signal indicative of the distance between the projectile and the ground or target This range signal can then be compared with a reference signal having the value that the range signal will take when the projectile is in the correct proximity to be activated. When the range signal and the reference signal are the same an activation signal is generated to activate the payload of the projectile, which could be, for example, high explosives, obscurance material or a lighting flare.

The fuze according to the present invention does not rely on the attenuation in amplitude of the echo signal as compared to the transmitted signal as an indicator of the distance it has travelled to reach the target (or the ground) and to return. Therefore, the ranges calculated in the fuze according to the present invention are not dependent on the reflectivity of the target (or the ground). Provided the echo signal has an amplitude sufficient to be received by the antenna means then the comparison of the time varying property of the transmitted signal and the echo signal can be used to generate an accurate indication of the range of the projectile from the target (or the ground).

In a first preferred embodiment the amplitude of the echo signal does not alter the calculated range, and the radio frequency signal is transmitted continuously. This preferred embodiment is suitable for use at relatively close proximities, such as 0.5m to 500m.

Advantageously, the range at which the fuze activates the payload is varied by changing the sweep time of the frequency varying signal transmitted by the antenna and keeping the reference signal constant.

The rate at which the frequency of the transmitted signal changes is known and so the difference in the frequency of the transmitted and received signal can be used to calculate the time taken for the transmitted signal to travel to the target (or the ground) and return to the antenna means and accordingly can be used to accurately calculate the distance of the projectile from the target (or the ground). To simplify the range calculation it is preferred that the oscillator generates a radio frequency signal for transmission by the antenna means which has a linearly varying frequency.

As the transmitted frequency changes and as the frequency of the received signal required to trigger activation of the payload of the projectile is not the same as the transmitted frequency and also changes, the fuze according to the present invention is more difficult to defeat using active sensor jamming measures than a "doppler" type fuze which transmits and receives a single frequency.

Preferably, the oscillator means comprises a voltage controlled oscillator and preferably the fuze additionally comprises means for generating a linear triangular waveform voltage for driving the voltage controlled oscillator.

In order to reduce the complexity and cost of the fuze a single antenna means is used for transmitting the radio frequency signal and for receiving the echo signal. This allows a directional coupling means to be used for coupling the radio frequency signal from the oscillator means to the antenna means and to the signal processing means and for coupling the echo signal from the antenna means to the signal processing means. A preferred directional coupling means which provides low cost and small size is a quarter wavelength branchline coupler comprising four ports. If such a coupler is used, to save space the oscillator means and the mixing means can be located within an area bordered by the quarter wavelength transmission lines of the branchline coupler.

According to an alternative embodiment of the present invention which is suitable for use at longer ranges, such as 500m to 1km the fuze is adapted to allow operation in a pulsed mode for transmitting a pulsed radio frequency signal. Here the time varying property can be amplitude as the amplitude of the radio frequency signal varies between zero and the amplitude with which the pulses are transmitted. According to this embodiment a series of pluses of radio frequency signal are transmitted, for example 10 pulses, and the echo signal pulses are received after travelling to the target (or the ground) and back. The time delay between transmitting the pulses and receiving them can be used to determine the range of the projectile from the target (or the ground). Furthermore, the difference in time delay for successive pulses can be used to determine the relative velocity between the target (or the ground) and the projectile. This embodiment is suitable for use at longer ranges because at short ranges the time delay between transmitted and received signals is too short for transmitted and received pulses to be discriminated, that is an echo of a pulse will be received while that pulse is still being transmitted.

This pulsed mode of operation can be used in combination with the frequency varying mode of operation described above. At long range the fuze can initially operate in pulsed mode to determine its proximity to the target (or the ground) and its velocity relative to the target (or the ground) and depending on the calculated distance and velocity can shut down until it is closer to the target (or the ground). Then, at a predetermined shorter range the fuze can be operated in frequency varying mode to calculate its range from the target (or the ground) and activate the payload of the projectile when the calculated range is the desired value for activation of the payload.

According to a second aspect of the present invention there is provided a tube launched projectile comprising a fuze as defined above.

The present invention will now be described with reference to the following Figures in which:

Figure 1 shows schematically a transceiver of the proximity fuze according to the present invention.

Figure 2 is a graph of frequency against time showing the radio frequency signal transmitted and the echo signal received by the transceiver of Figure 1.

Figure 3 shows schematically a directional branchline coupler for use in the transceiver of Figure 1.

Figure 4 is a graph of relative power against frequency showing the output of the ports 1 to 4 of the coupler of Figure 3 when a signal is input into port 1.

Figure 5 shows an equivalent coupler to that shown in Figure 3 in a ring formation.

Figure 6 shows schematically a transceiver similar to that in Figure 1 but using the ring coupler of Figure 5.

Figure 7 shows schematically the preferred circuit layout of the transceiver shown in Figure 6.

Figure 8 shows schematically the location of the proximity fuze according to the present invention incorporating the transceiver of Figure 7 in the nose of a tube launched projectile.

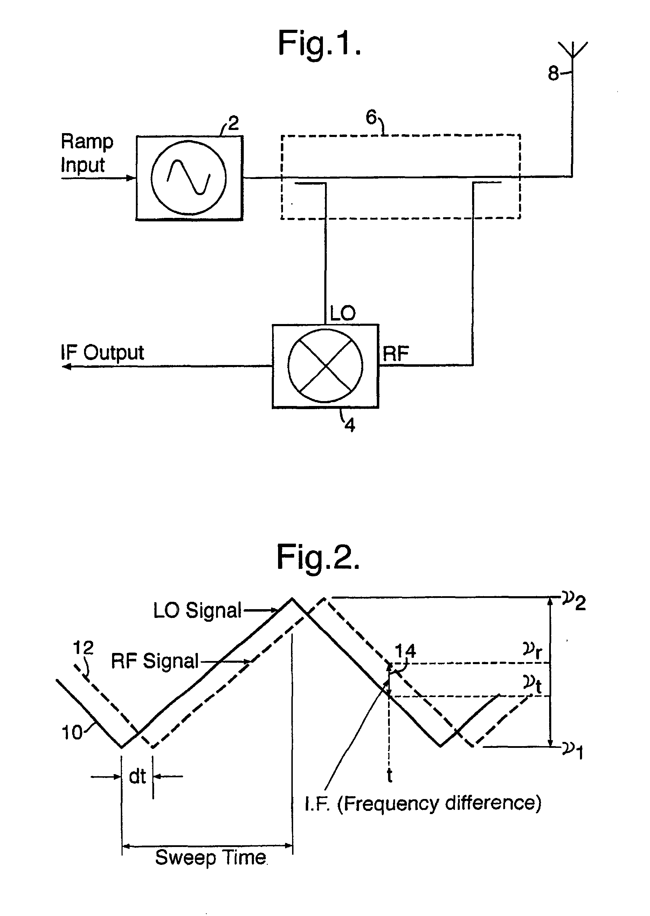

In Figure 1 is shown a transceiver according to the present invention which comprises a voltage controlled oscillator (2), a mixer (4), a directional coupler (6) and an antenna (8). The voltage controlled oscillator (2) is controlled by a continuous linear triangular voltage waveform. The oscillator (2) converts the input voltage waveform into a radio frequency signal having a linear frequency sweep (a chirp). The oscillator output signal is divided into two parts by the coupler (6). Part of the signal is directly coupled to and transmitted by the antenna (8) and the other part of the signal is coupled to the local oscillator (LO) port of the mixer (4). The radio frequency signal is radiated by the antenna (8) in a semi-omnidirectional manner and a small part of the radiated power is reflected back to the antenna (8) by a target or by the ground. This returned or echo signal is divided into two parts, one part is coupled to the radio frequency (RF) port of the mixer (4) and the other part is coupled to and terminated in the oscillator (2).

Figure 2 shows a schematic representation of the frequency change with time of the radio frequency signals transmitted and received by the antenna (8), ie. the frequency change of the signals at the LO and RF ports of the mixer (4) respectively. The transmitted signal travels from the antenna (8) to the ground and back at the speed of light which takes a finite and measurable time ($\delta$t in Figure 2). The time taken ($\delta$t) corresponds to the intermediate frequency (IF) output from the mixer (4). As indicated above, the voltage controlled oscillator (2) is controlled by a continuous linear triangular voltage waveform. This generates a radio frequency output from the oscillator (2) which undergoes a linear frequency sweep (or chirp) between $f_1$ and $f_2$ as shown in the full line (10) of Figure 2. The input into the LO port of the mixer (4) (full line (10) in Figure 2) is representative of the frequency transmitted by the antenna (8) and the input into the RF port of the mixer (4) (dotted line (12) in Figure 2) is representative of the frequency received by the antenna (8). The mixer (4) then generates an IF output (represented by difference (14) in Figure 2) which is representative of the difference between the frequency of the LO and RF port inputs. Because the frequency transmitted by the antenna (8) is either linearly increasing or linearly decreasing the difference between the frequency transmitted by the antenna $f_t$ and the frequency received by the antenna $f_r$ at any time t (See Figure 2) is directly and linearly related to the time $\delta$t it has taken for the transmitted signal to reach the target or the ground and be reflected back to the antenna, ie, it is directly and linearly related to the distance of the antenna, and thus of a projectile carrying the antenna, above the ground.

The frequency of the IF output from the mixer is directly proportional to the product of the frequency sweep rate (Hz/s) (the rate at which the frequency of the transmitted signal changes with time) and the round trip time (the time it takes for the transmitted signal to travel from the antenna to the ground or target and back to the antenna). The round trip time is equal to twice the range of the antenna (the range is the distance of the antenna from the ground or target) divided by the speed of light. When the intermediate frequency output from the mixer (4) is known then:

$$R = cSf/2d$$

where

R = Range (m)
c = Speed of light (ms$^{-1}$)
S = Sweep time (s), ie. the time to sweep from $f_1$ to $f_2$ or vice versa
f = Intermediate frequency (Hz)
d = Chirp deviation

Thus, if the projectile is to be set to activate its payload at a range R, the reference signal with which the intermediate signal from the mixer (4) is compared is the corresponding value for f.

As the projectile gets closer to the target or the ground the time taken for the echo signal to be received ($\delta$t in Figure 2) decreases and so the traces in Figure 2 of the frequency of the transmitted signal (black lines) and echo signal (dotted lines) will move closer together. Thus, as the projectile approaches the target or the ground the frequency of the intermediate frequency signal generated by the mixer (4) will become smaller. When the intermediate frequency is equal to a reference frequency f as calculated above which corresponds to the range R at which the payload is to be activated, signal processing means responsive to the intermediate frequency signal generates an activation signal that activates the payload.

The transceiver according to the present invention avoids the problem of variable ground reflectivity because it compares the frequency of the transmitted and reflected signals and is not dependent on the amplitude of the reflected signal to determine range. The present system is only dependent on the amplitude of the echo signal to the extent that there has to be a detectable echo signal for the system to work, however, this is a matter of designing the system to cope with the worst case conditions.

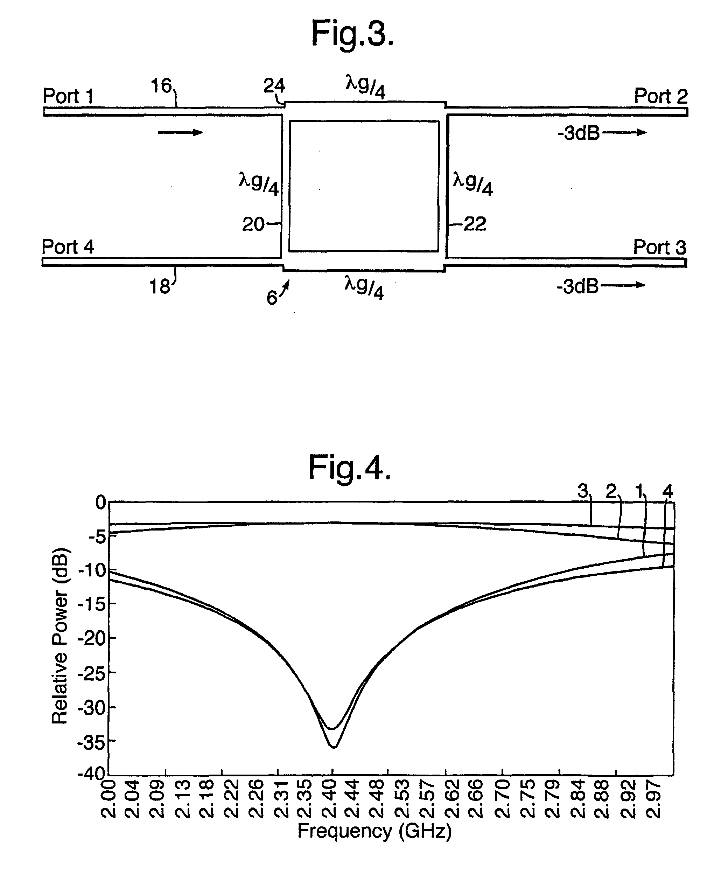

A branch line coupler (6) as shown in Figure 3 is used in the arrangement of Figure 1, because it is directional, has four ports and provides at least a 3dB power split. Also, it is relatively insensitive to other components in close proximity and only takes up a small amount of space (preferably a diameter of less than 30mm) as it will have to be located with other components in a small space in the projectile. The coupler (6) operates at a frequency of 2.45GHz with a return loss and isolation of at least -15dB over a range of 100MHz.

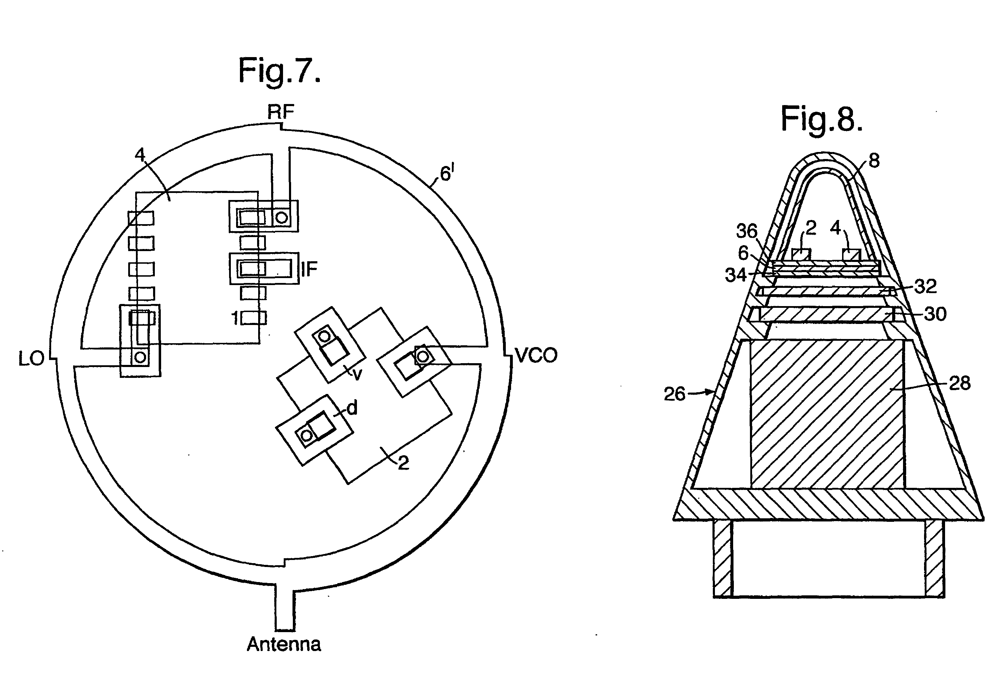

The branch line coupler (6) consists of two parallel transmission lines (16) and (18) cross-connected by two quarter wavelength branch lines (20) and (22) which are spaced apart by a quarter wavelength. These transmission and branch lines of the coupler (6) are sandwiched between two pieces of groundplane substrate (34 and 36 in Figure 8) to form a stripline structure, in the conventional way. Power into any one of the four ports of the coupler (6) will be split into two and appear in phase quadrature at the opposing two ports and the adjacent port will receive no output when the coupler (6) is correctly terminated. For example, a signal input into Port 1 of the coupler (6) will be split in two at junction (24) and appear at Port 2 and Port 3 with a relative delay at Port 3 of $\lambda_g/4$ relative to the output from Port 2 and no output will be received at Port 4. The input impedance of the coupler (6) was selected to be 50 Ohms and its modelled output is shown in Figure 4 which shows the variation in the output powers of Ports 1 to 4 with the frequency of a signal which is input at Port 1. It can be seen that the 3dB split required for the coupler (6) is achieved across an adequate bandwidth.

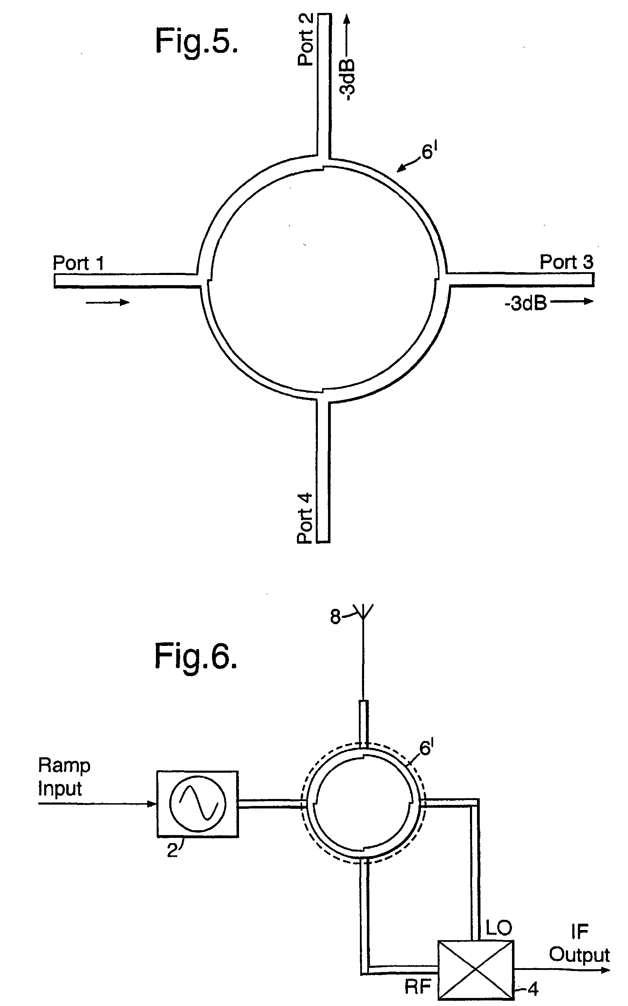

As an alternative the coupler (6') shown in Figure 5 could be used. The coupler (6') is equivalent to the coupler (6) shown in Figure 3, except that it is formed into a ring as this gives a space saving.

Figure 6 shows a transceiver similar to that in Figure 1 (with like parts having like numerals) which uses a ring coupler (6') as described above in relation to Figure 5. The mixer (4) is a type CDB-9025 mixer available from ST OLECTRON CORP and the oscillator (2) is a type MV-146 available from MODCO. A suitable space for the oscillator (2) and mixer (4) was found inside the perimeter of the ring coupler (6') as is shown in the detailed layout in Figure 7 (again with like numerals indicating like parts) in order to conserve space. The coupler (6') is sandwiched between two pieces of groundplane substrate (34 and 36), and the oscillator (2) and mixer (4) will sit on top of the one of these substrates (36) as shown schematically in Figure 8.

Figure 8 shows a proximity fuze which uses the transceiver arrangement of Figure 7 located in the nose portion (26) of a projectile. The nose portion (26) can be fitted to the remainder of the projectile (not shown) containing a payload. The nose (26) houses a battery (28) for powering the fuze, control electronics (30), a receive electronics (32) and the transceiver arrangement of Figure 7, including an antenna (8). The control electronics (30) generate the triangular voltage waveform used to drive the voltage controlled oscillator (2). The receive electronics receives the IF signal generated by the transceiver arrangement of Figure 7 and compares it to a predetermined intermediate frequency value which corresponds to the distance from the ground at which the payload of the projectile is to be detonated or activated. When the IF frequency generated by the transceiver arrangement of Figure 7 is equal to the predetermined intermediate frequency value the receive electronics generate an activate signal which is used to activate the payload of the ammunition. The predetermined intermediate frequency value will be set at different levels corresponding to different activation heights suitable for different applications.

It is also possible to make the intermediate frequency at which the activation signal is generated adjustable by an adjustment mechanism, using for example voltage tunable filters (not shown). However, a simpler way to change the range at which the fuze activates the payload is by changing the sweep time (S in the equation on page 11) of the frequency varying signal transmitted by the antenna and keeping the intermediate frequency at which the fuze activates the payload constant. For a fixed intermediate frequency f, the sweep time S will be proportional to the range at which the fuze activates the payload. So for longer ranges the sweep time can be increased and for shorter ranges the sweep time can be decreased.

The oscillator (2) and mixer (4) are mounted on one of the two groundplane substrates (34,36) which sandwich the ring coupler (6'). The antenna (8) provides at least hemi-spherical coverage in order to detect the ground reliably under all attitude and roll conditions of the ammunition in flight.

The frequency variation of the output of the oscillator (2) with drive voltage is such that the frequency tunes from about 2.4GHz at 5V to 2.7GHz at 10V. The region from 5V to 7V adequately covers the frequency band of interest and the tuning sensitivity within this region is about 90MHz per volt. The linearity of the frequency output of the oscillator (2) in the range of 5V to 7V is around 20% peak to peak, which is adequate for the present application.

The proximity fuze described above is can be used for detonation ranges of between 3 to 15m for high explosive and smoke rounds, at around 80m for illumination flares and obscurance rounds and for cargo rounds.

For longer distances, in which the received signal is separated from the transmitted signal by a time period greater than twice the sweep time (ie. greater than a single period of the triangular waveform used to generate chirp), the fuze according to the present invention is preferably operated in a pulsed mode. In pulse mode the time taken for a pulse of rf signal to be transmitted from the antenna until the echo of it is received can be used to determine the distance of the projectile from the ground. The relative change in time delay for successive pulses can be used to determine the velocity of the projectile in the vertical direction, ie. relative to the ground. The pulse width could be as short as around 2 to 3 microseconds, which would work down to ranges of around 500m. At closer ranges it would not be possible to discriminate between transmitted and received pulses. A series of for example, 10 pulses could be transmitted and received and then the transmission of signals could be switched off for a period dependent on the measured distance and velocity until the ammunition is closer to the ground. After a time delay dependent on the previously calculated range and velocity when the projectile is close enough to the ground, the transmission of a radio frequency signal would again be started and the fuze arrangement could be operated in intermediate frequency mode (ie. as described above in relation to Figures 1 to 8) to detonate the ammunition at the predetermined height above the target. Switching transmission off for a period would help counteract jamming.

The control electronics (30) shown in Figure 8 can include timers to turn the proximity fuze on and off and to switch between the pulsed operating mode at longer ranges and the frequency varying operating mode at shorter ranges. In pulse mode the control electronics can be used to work out the range of the fuze from the target or the ground depending on the timing of the sending and receipt of successive pulses.

**Claims**

1. A proximity fuze for use in a tube launched projectile carrying a payload, comprising:

   an oscillator (2) for generating a continuous radio frequency signal which has a varying frequency,
   a single antenna (8) for transmitting the continuous radio frequency signal and for receiving an echo of the continuous radio frequency signal,
   a signal processor comprising mixing means (4) for mixing at least part of the transmitted signal with at least part of echo signal simultaneously received, to generate a range signal comprising an intermediate frequency signal with a frequency corresponding to the difference between the frequency of the transmitted radio frequency signal and the simultaneously received echo signal, said echo signal simultaneously received not being an echo of the transmitted signal at the point in time when the signals are mixed, means (32) for comparing the range signal with a reference signal and depending on the result of the comparison generating an activation signal for activating the payload,
   and wherein a directional coupling means (6) is used for coupling the radio frequency signal from the oscillator (2) to the antenna (8) and to the signal processor and for coupling the echo signal from the antenna (8) to the signal processor.

2. A fuze according to claim 1 wherein the range at which the fuze activates the payload is varied by changing the sweep time of the frequency varying signal transmitted by the antenna (8) whilst keeping the reference signal constant.

3. A fuze according to claim 1 or claim 2 wherein the radio frequency signal has a linearly varying frequency.

4. A fuze according to any one preceding claim wherein the oscillator means comprises a voltage controlled oscillator (2).

5. A fuze according to claim 4 wherein the fuze additionally comprises means for generating a linear triangular wave form voltage for driving the voltage controlled oscillator.

6. A fuze according to any one preceding claim wherein the directional coupling means comprises a quarter wavelength branch line coupler (6) comprising four ports.

7. A fuze according to claim 6 wherein the oscillator means (2) and the mixing means (4) are located within an area bordered by the quarter wavelength transmission lines of the branch line coupler (6).

8. A fuze according to any one preceding claim wherein the fuze is adapted to allow operation in a pulsed mode, for transmitting a pulsed radio frequency signal.

9. A fuze according to claim 8 wherein the fuze comprises means for switching between a pulsed operating mode and a frequency varying operating mode.

10. A tube launched projectile comprising a fuze according to any one of claims 1 to 9.

**Patentansprüche**

1. Näherungs-Zünder zur Verwendung in einem aus einem Rohr abgefeuerten Projektil, das eine Nutzlast trägt, mit den folgenden Merkmalen:

   - einen Oszillator (2) zur Erzeugung eines kontinuierlichen Hochfrequenzsignals, das eine sich ändernde Frequenz aufweist;
   - eine einzige Antenne (8) zum Senden des kontinuierlichen Hochfrequenzsignals und zum Empfang eines Echos des kontinuierlichen Hochfrequenzsignals;
   - einen Signalprozessor, der eine Mischeinrichtung (4) aufweist, um wenigstens einen Teil des gesendeten Signals mit wenigstens einem Teil des gleichzeitig empfangenen Echosignals zu mischen, und um ein Entfernungssignal zu erzeugen, das ein Zwischenfrequenzsignal mit einer Frequenz aufweist, die der Differenz zwischen der Frequenz des gesendeten Hochfrequenzsignals und des gleichzeitig empfangenen Echosignals entspricht, wobei das gleichzeitig empfangene Echosignal kein Echo des gesendeten Signals zu jenem Zeitpunkt ist, an dem die Signale gemischt werden;

   - Mittel (32) zum Vergleich des Entfernungssignals mit einem Bezugssignal und in Abhängigkeit vom Ergebnis des Vergleichs wird ein Aktivierungssignal erzeugt, um die Nutzlast zu aktivieren;
   - und wobei ein Richtungskoppler (6) benutzt wird, um das Hochfrequenzsignal vom Oszillator (2) an die Antenne (8) und den Signalprozessor anzukoppeln und um das Echosignal von der Antenne (8) an den Signalprozessor anzukoppeln.

2. Zünder nach Anspruch 1, bei welchem die Entfernung bei der der Zünder die Nutzlast aktiviert, durch Änderung der Wobbelzeit des Signals sich ändernder Frequenz geändert wird, das von der Antenne (8) gesendet wird, während das Bezugssignal konstant gehalten wird.

3. Zünder nach den Ansprüchen 1 oder 2, bei welchem das Hochfrequenzsignal eine sich linear ändernde Frequenz aufweist.

4. Zünder nach einem der vorhergehenden Ansprüche, bei welchem der Oszillator ein spannungsgesteuerter Oszillator (2) ist.

5. Zünder nach Anspruch 4, bei welchem der Zünder außerdem Mittel aufweist, um eine lineare Dreieckswellenspannung zu erzeugen, um den spannungsgesteuerten Oszillator zu steuern.

6. Zünder nach einem der vorhergehenden Ansprüche, bei welchem der Richtungskoppler ein Viertelwellenlängen-Zweigleitungskoppler (6) ist, der vier Eingänge aufweist.

7. Zünder nach Anspruch 6, bei welchem der Oszillator (2) und die Mischeinrichtung (4) innerhalb eines Bereichs angeordnet sind, der durch die Viertelwellenlängen-Übertragungsleitungen des Zweigleitungskopplers (6) umschlossen ist.

8. Zünder nach einem der vorhergehenden Ansprüche, bei welchem der Zünder derart ausgebildet ist, daß er einen Impuls-Modus ermöglicht, um ein Impuls-Hochfrequenzsignal auszusenden.

9. Zünder nach Anspruch 8, bei welchem der Zünder Mittel aufweist, um zwischen einem Impuls-Arbeitsmodus und einem Arbeitsmodus mit sich ändernder Frequenz umzuschalten.

10. Aus einem Rohr abgefeuertes Projektil, mit einem Zünder gemäß einem der Ansprüche 1 bis 9.

**Revendications**

1. Une fusée de proximité destinée à être utilisée dans un projectile lancé par tube portant une charge utile, comportant :

   un oscillateur (2) destiné à générer un signal de fréquence radio continu, lequel a une fréquence variable,

   une antenne unique (8) destinée à transmettre le signal de fréquence radio continu et à recevoir un écho du signal de fréquence radio continu,

   un processeur de signal comportant un moyen de mélange (4) destiné à mélanger au moins une partie du signal transmis à au moins une partie du signal écho reçu simultanément, pour générer un signal de distance comportant un signal de fréquence intermédiaire avec une fréquence correspondant à la différence entre la fréquence du signal de fréquence radio transmis et le signal écho reçu simultanément, ledit signal écho reçu simultanément n'étant pas un écho du signal transmis au moment où les signaux sont mélangés, un moyen (32) destiné à comparer le signal de distance à un signal de référence et, en fonction du résultat de la comparaison, à générer un signal d'activation pour activer la charge utile,

   et dans lequel un moyen de couplage directionnel (6) est utilisé pour coupler le signal de fréquence radio provenant de l'oscillateur (2) à l'antenne (8) et au processeur de signal et pour coupler le signal écho provenant de l'antenne (8) au processeur de signal.

2. Une fusée selon la revendication 1 dans laquelle le fait de changer le temps de balayage du signal variable en fréquence transmis par l'antenne (8) tout en conservant le signal de référence constant fait varier la distance à laquelle la fusée active la charge utile.

3. Une fusée selon la revendication 1 ou la revendication 2 dans laquelle le signal de fréquence radio a une fréquence linéairement variable.

4. Une fusée selon une quelconque revendication précédente dans laquelle le moyen oscillateur comporte un oscillateur commandé en tension (2).

5. Une fusée selon la revendication 4 dans laquelle la fusée comporte de plus un moyen destiné à générer une tension linéaire en forme d'onde triangulaire pour entraîner l'oscillateur commandé en tension.

6. Une fusée selon une quelconque revendication précédente dans laquelle le moyen de couplage directionnel comporte un coupleur de ligne de branchement en quart d'onde (6) comportant quatre points d'accès.

7. Une fusée selon la revendication 6 dans laquelle le moyen oscillateur (2) et le moyen de mélange (4) sont situés à l'intérieur d'une zone bordée par les lignes de transmission en quart d'onde du coupleur de ligne de branchement (6).

8. Une fusée selon une quelconque revendication précédente dans laquelle la fusée est adaptée pour permettre le fonctionnement en mode pulsé, pour transmettre un signal de fréquence radio pulsé.

9. Une fusée selon la revendication 8 dans laquelle la fusée comporte un moyen pour commuter entre un mode de fonctionnement pulsé et un mode de fonctionnement variable en fréquence.

10. Un projectile lancé par tube comportant une fusée selon une quelconque des revendications 1 à 9.

# Fig.1.

# Fig.2.

# Fig.3.

Port 1  16  24  λg/4  Port 2

-3dB →

λg/4  λg/4

20  22

Port 4  Port 3

18  6  λg/4  -3dB →

# Fig.4.

Fig.5.

Port 2

-3dB

6'

Port 1

-3dB

Port 3

Port 4

Fig.6.

8

6'

Ramp
Input

2'

LO

IF
Output

RF

4

Fig.8.

Fig.7.